# DEMANDE DE BREVET EUROPEEN

(11) **EP 4 693 849 A1**
(43) Date de publication de la demande: **11.02.2026**
(21) Numéro de dépôt: 25189787.2
(22) Date de dépôt: 16.07.2025
(51) Int. Cl.: H02K 15/24

(54) **OUTIL DE FORMAGE DE CHIGNON DE STATOR ET PROCÉDÉ METTANT EN OEUVRE UN TEL OUTIL**

(30) Priorité: 16.07.2024 FR 2407785
(71) Demandeur: Ampere SAS, 92100 Boulogne-Billancourt (FR)
(72) Inventeur: FE, Julien, 76410 CLEON (FR); GUIBE, Pierre, 76410 CLEON (FR)
(74) Mandataire: Renault Group

(57) **Abrégé**

L'invention concerne un outil de formage pour chignon (CG) d'un stator (ST) bobiné de machine électrique, l'outil (1) comportant
- un élément de butée (12) configuré pour venir axialement en butée contre une partie distale du chignon (CG) relativement au stator (ST),
- au moins une pince (17) configurée pour exercer une compression radiale sur le chignon,
- au moins une poignée (10) fixe par rapport à l'élément de butée et,
- une commande manuelle (11) située sur la poignée (10) et configurée pour commander la fermeture de la pince (17).

Il est également proposé un ensemble comportant un outil de formage (1) et un équilibreur de charge (26), ainsi qu'un procédé de formage de chignon de stator mettant en œuvre l'outil selon l'invention.

## Description

### Domaine technique de l'invention

La présente invention concerne de manière générale le domaine des machines électriques, et notamment la fabrication des stators de machines électriques.

Elle concerne plus particulièrement un outil de formage pour chignon de stator, un ensemble comportant un tel outil et un procédé de formage de chignon de stator mettant en œuvre un tel outil.

### Etat de la technique

Une machine électrique est un dispositif électromécanique permettant la conversion d'énergie électrique en énergie mécanique et/ou vice versa. Les voitures électriques ou hybrides sont équipées de telles machines électriques (alors communément appelées « moteurs électriques ») lesquelles permettent, lorsqu'elles sont alimentées par une source de courant, d'entraîner les roues du véhicule.

Une machine électrique comporte une partie fixe par rapport au châssis du véhicule (le stator), et une partie mobile (le rotor). La mise en mouvement du rotor par rapport au stator est due à une attraction et/ou une répulsion entre des champs magnétiques du rotor et du stators.

Pour générer ces champs, un stator bobiné de machine électrique à flux radial comporte un corps annulaire (généralement cylindrique) et des encoches longitudinales réalisées en creux dans la face intérieure du corps. Ces encoches délimitent entre elles des saillies. Des bobinages de fil électrique sont enroulés autour de ces saillies et forment un « chignon » à chaque extrémité du corps annulaire. Ces bobinages sont ensuite imprégnés par une résine protectrice.

Une fois alimentés en courant, les bobinages créeront alors des champs électromagnétiques permettant de faire pivoter le rotor situé à l'intérieur du stator.

Lors de la fabrication du stator, préalablement à l'imprégnation du chignon et des bobinages par la résine protectrice, le chignon du stator est contrôlé et ses dimensions sont ajustées par un opérateur de façon que le chignon présente les dimensions attendues. Classiquement, l'opérateur vérifie les dimensions du chignon à l'aide d'un gabarit et ajuste localement la forme du chignon à l'aide d'un maillet. Cette manière de procéder n'offre pas une ergonomie optimale, présente des risques pour la sécurité de l'opérateur, peut être longue et sujette aux erreurs ou omissions de la part de l'opérateur.

Il existe donc un besoin de développer une solution pour la mise en forme du chignon du stator, afin d'améliorer la sécurité, l'ergonomie, l'uniformité des produits et la productivité des processus de fabrication des moteurs électriques.

### Présentation de l'invention

Dans ce but, la présente invention propose un outil semi-automatique de formage de stator.

Selon un aspect, il est proposé un outil de formage pour chignon d'un stator bobiné de machine électrique comportant un corps annulaire à l'intérieur duquel est ménagée une pluralité d'encoches longitudinales, une pluralité de bobinage comportant des fils insérés dans les encoches longitudinales et formant ledit chignon au niveau d'une extrémité du stator, l'outil comportant
- un élément de butée configuré pour venir axialement en butée contre une partie distale du chignon relativement au stator,
- au moins une pince configurée pour exercer une compression radiale sur le chignon,
- au moins une poignées fixe par rapport à l'élément de butée et,
- une commande manuelle située sur la poignée et configurée pour commander la fermeture de la pince.

Grâce à l'invention, un opérateur chargé de former un chignon de stator préalablement à son imprégnation dispose d'un outil semi-automatique qu'il peut aisément positionner sur le chignon grâce à la poignée et qui permet d'exercer une force de compression sur le chignon par le simple actionnement d'une commande. La sécurité de l'opérateur, l'ergonomie de l'opération et le formage du chignon s'en trouvent améliorées.

D'autres caractéristiques avantageuses et non limitatives de l'outil conforme à l'invention, prises individuellement ou selon toutes les combinaisons techniquement possibles, sont les suivantes :
- l'outil comporte deux poignées fixes par rapport à l'élément de butée et séparées d'une distance telle qu'elles puissent chacune être saisie par une main distincte d'un même opérateur (par exemple, une distance inférieure ou égale à 1,65 mètres), une première commande manuelle étant située sur une première des deux poignées et une deuxième commande manuelle étant située sur une deuxième des deux poignées ;

L'outil comporte en outre un plot de centrage qui s'étend depuis l'élément de butée et qui est configurée pour être inséré dans le corps annulaire, selon un axe central du corps annulaire ; l'outil comporte un anneau de fixation adapté à être fixé à un équilibreur de charge pour la suspension de l'outil ;
- la distance séparant les poignées est supérieure ou égale à 50 centimètres ;
- la pince est pourvue de deux mors et est configurée pour que la course maximale de chaque mors inférieure ou égale à 13 millimètres ;
- la pince est configurée pour exercer une force de compression maximale comprise entre 1400 newtons et 1600 newtons ;
- la pince est pourvue d'un mors intérieur présentant une surface convexe et adaptée à épouser une surface intérieure du chignon et d'un mors extérieur présentant une surface concave et adaptée à épouser une surface extérieure du chignon.
- l'outil comporte une pluralité de pinces.

Selon un autre aspect, il est proposé un ensemble comportant un outil de formage selon l'invention et un équilibreur de charge dont la puissance de retour est équivalente au poids de l'outil.

Selon un autre aspect, il est proposé un procédé de formage d'un chignon de stator bobiné de machine électrique comportant un corps annulaire à l'intérieur duquel est ménagée une pluralité d'encoches longitudinale, une pluralité de bobinage comportant des fils insérés dans les encoches longitudinales et formant ledit chignon au niveau d'une extrémité du stator, le procédé comportant
- un positionnement, par un opérateur à l'aide de ladite au moins une poignée, d'un outil de formage selon l'une quelconque des revendications 1 à 8 de façon que l'élément de butée soit en contact avec la partie distale du chignon,
- un actionnement de ladite commande manuelle de façon à actionner la fermeture de la pince et à compresser radialement le chignon,
- un retrait de l'outil du stator par l'opérateur à l'aide de ladite au moins une poignée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig.1] est une vue schématique d'un outil de formage selon un mode de réalisation de l'invention, placé en contact avec un chignon de stator ;
[Fig.2] est une vue schématique en coupe de l'outil de la [Fig.1] ;
[Fig.3] est une vue de dessus de l'outil de la [Fig.1] dans laquelle un élément est rendu transparent ;
[Fig.4] est une vue de dessous de l'outil de la [Fig.1];
[Fig.5] est une vue schématique d'un opérateur mettant en œuvre un procédé selon un mode de réalisation de l'invention grâce à un ensemble selon l'invention qui comporte l'outil de la [Fig.1].

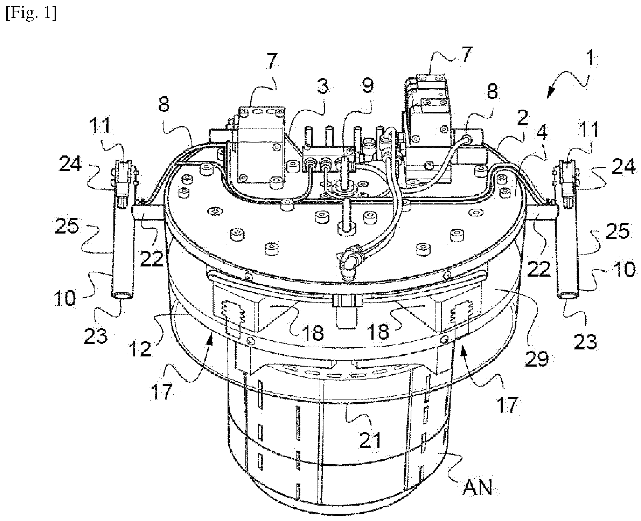

Un outil de formage selon un mode de réalisation de l'invention, tel que représenté schématiquement sur les figures 1 à 5 et désigné dans son ensemble par la référence numérique 1, est destiné à être placé en contact avec un chignon CG d'un stator ST de machine électrique, ici à flux radial, de façon à exercer sur celui-ci une force de compression radiale.

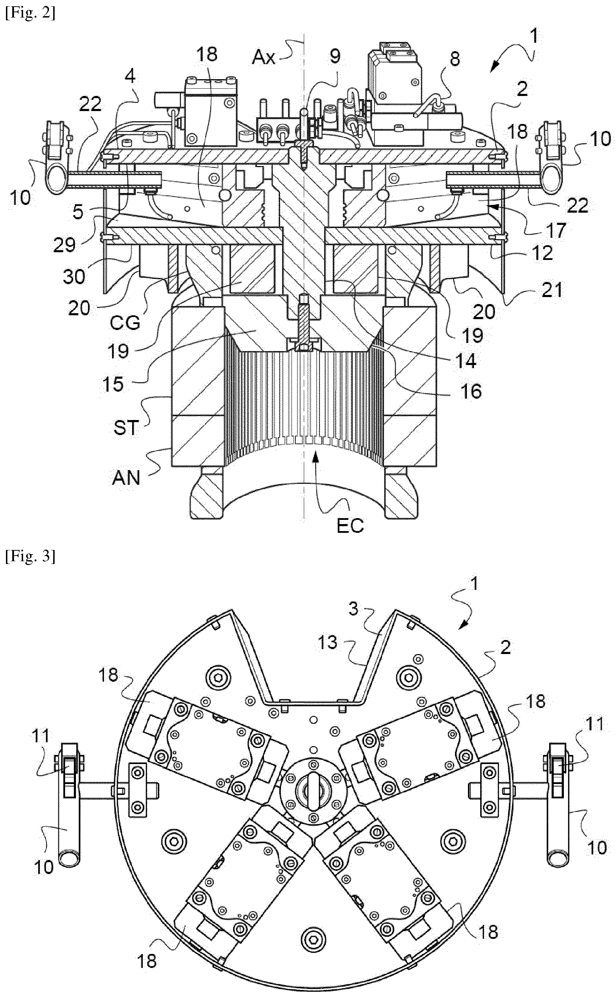

Comme le montre bien la [Fig.2], le stator ST est un stator bobiné comportant un corps annulaire AN allongé selon un axe central et présentant une face interne. Ce corps annulaire AN présente une pluralité d'encoches longitudinales EC en creux dans sa face interne, qui sont régulièrement réparties autour de l'axe central et qui débouchent aux deux extrémités du corps annulaire AN. Le stator ST comporte également une pluralité de bobinage comportant des fils insérés dans les encoches longitudinales EC et formant ledit chignon CG au niveau d'une extrémité du stator ST (en pratique, des chignons sont formés aux deux extrémités du corps annulaire AN).

A l'issue du bobinage du fil électrique dans les encoches longitudinales EC, le chignon CG présente rarement la forme voulue et il est nécessaire de le comprimer.

Dans ce dessein, l'outil 1 présente ici une structure globalement cylindrique centrée autour d'un axe Ax qui, lorsque l'outil 1 est convenablement positionné sur le chignon comme c'est le cas sur les figures 1 et 2, est confondu avec l'axe central du corps annulaire AN du stator ST.

L'outil 1 comporte ici une embase 2, ici une plaque globalement cylindrique, prévue pour supporter la majeure partie de ses composants. En particulier, l'embase 2 est une plaque circulaire dans laquelle une encoche 3 a été ménagée. Une telle encoche 3 ménagée dans l'outil permet de dégager un espace pour une partie des fils conducteurs qui sont issus du chignon CG mais n'en faisant pas partie et qui sont destinés à être connectés à un circuit d'alimentation du véhicule automobile dans lequel sera placé le stator ST.

L'encoche 3 occupe ici tout l'espace du disque qui est situé entre deux rayons séparés d'un angle de 45°, à une distance du centre du disque comprise entre la moitié du rayon du disque et la périphérie du disque.

L'embase 2 comporte une première face 4, ou face supérieure, et une deuxième face 5, ou face inférieure.

Comme le montrent les figures 1 et 2, la première face 4 accueille un circuit de distribution pneumatique, comportant ici deux distributeurs pneumatiques 7 et des tuyaux de distribution pneumatique 8 connectés aux distributeurs pneumatiques 7. La première face 4 accueille en outre un anneau de suspension 9 qui est configuré pour être connecté à un câble de suspension, notamment à un câble de suspension d'un équilibreur de charge, et qui est fixé au centre de l'embase 2.

L'outil 1 comporte ici deux poignées 10 fixées au niveau de la deuxième face 5 et qui s'étendent radialement à l'extérieur du contour de l'embase 2, depuis des points diamétralement opposés. Les poignées 10 sont en particulier ici situées chacune à une même distance de l'encoche 3.

La configuration de chaque poignées 10 la rend adaptée à être saisie par une main distincte d'un même opérateur. Les deux poignées 10 présentent par exemple ici des structures en miroir. Leur configuration par rapport à l'embase 2 sont telles que la saisie la plus adaptée se fait en étant placé du côté de l'embase 2 diamétralement opposé à l'encoche 3. Les poignées sont par exemple ici séparées d'une distance de 50 centimètres.

En particulier, chaque poignée 10 présente ici une forme de T, avec une première partie tubulaire 22, fixée à la deuxième face 5 de l'embase 2, qui s'étend radialement vers l'extérieur de l'outil 1, à l'extrémité de laquelle est fixée une deuxième partie tubulaire 23. La deuxième partie tubulaire 23 s'étend orthogonalement depuis la première partie tubulaire 22, ici avec angle par rapport à la surface de l'embase (c'est-à-dire par rapport au sol lors de l'utilisation de l'outil 1) tel qu'un opérateur puisse les saisir de façon ergonomique, par exemple sans courbure excessive du poignet par rapport à l'avant-bras. Par exemple ici, l'angle est de 45°.

L'outil 1 comporte en outre une butée 12, ou plaque d'usure, située à distance de l'embase 2 et en vis-à-vis de la deuxième face 5.

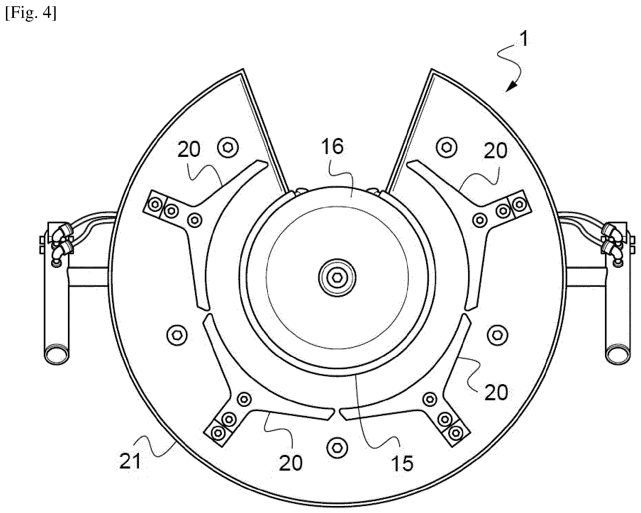

La butée 12 présente ici une géométrie et des dimensions identiques à celles de l'embase 2, elle présente donc une forme de disque comportant une première face 29, ou face supérieure (particulièrement visible sur la [Fig.3] qui est une vue de dessus de l'outil 1 dans laquelle l'embase 2 est rendue transparente), située en vis-à-vis de la deuxième face 5 de l'embase 2, une deuxième face 30, ou face inférieure (particulièrement visible sur la [Fig.4]), opposée à la première face 29, et une encoche 13. La butée 12 est placée de façon parallèle et coaxiale par rapport à l'embase 2, de façon que les encoches 3, 13 soient en vis-à-vis.

Comme le montre la [Fig.2], la butée 12 est maintenue à distance de l'embase 2 par l'intermédiaire d'un axe de fixation 14. Ici, cet axe de fixation 14 est fixé à l'embase 2 et s'étend axialement (c'est-à-dire selon l'axe Ax) à partir de la deuxième face 5 de l'embase, au travers de la butée 12 qui lui est solidaire.

Au niveau de l'extrémité de l'axe de fixation 14, à une distance non nulle de la butée 12, est fixé un plot de centrage 15. Ce plot de centrage 15 s'étend donc à partir de ladite distance no nulle de la butée 12, du côté opposé à l'embase 2. Il présente ici une forme globalement cylindrique de révolution autour de l'axe Ax. L'extrémité distale du plot de centrage 15 est plane. Un chanfrein 16 est toutefois prévue autour de cette extrémité distale, ce qui permet de faciliter son insertion dans le stator ST.

A ce stade, on comprend donc que l'outil 1 est prévu pour être placé sur le stator ST, en engageant son plot de centrage 15 à l'intérieur du chignon CG de telle sorte que la butée 12 vienne en appui contre ce chignon et que l'axe central et l'axe Ax se confondent.

L'outil 1 est pourvu ici d'une pluralité de pinces 17, configurées ici pour exercer une force de compression radiale (par rapport à l'axe Ax) sur le chignon CG.

Dans cet exemple, l'outil comporte quatre pinces 17 identiques, comportant chacune un bloc actionneur 18 (particulièrement visible sur la [Fig.3]) qui est alimenté par le circuit de distribution pneumatique et qui contrôle une mâchoire comportant un mors intérieur 19 de la pince et un mors extérieur 20 de la pince (particulièrement visibles sur les figures 2 et 4). Les mors intérieurs 19 et extérieurs 20 présentent ici des faces qui sont destinées à être en contact avec le chignon CG et qui sont incurvées, de façon à épouser la courbure du chignon CG. Les mors intérieurs 19 comportent des faces intérieures destinées à entrer en contact avec la surface intérieure du chignon CG (celle tournée vers l'axe du stator) qui présentent une forme convexe, et les mors extérieur 20 comporte des faces intérieures destinées à entrer en contact avec la surface extérieure du chignon CG (celle tournée à l'opposé de l'axe central du stator ST) qui présentent des formes concaves. Les faces intérieures des mors intérieurs 19 et les faces extérieures des mors extérieurs 20 présentent des rayons de courbure tels qu'elles sont incurvées autour d'un axe qui est confondu avec l'axe Ax de l'outil.

Les mors intérieurs 19 sont localisés longitudinalement (selon l'axe Ax) entre la butée 12 et le plot de centrage 15. Ils sont montés mobiles radialement par rapport à l'axe Ax.

Les mors extérieurs 20 sont situés longitudinalement entre la butée 12 et le plot de centrage 15, et radialement (relativement à l'axe Ax) autour du plot de centrage 15 (c'est-à-dire qu'ils sont plus éloignés de l'axe Ax que ne l'est le contour du plot de centrage 15). Ils sont montés mobiles radialement par rapport à l'axe Ax. Les deux mors d'une même pince 17 sont notamment conçus pour se déplacer selon le même axe radial.

Ici, les mors extérieurs 20 présentent globalement des formes de T, avec un pied fixé au bloc actionneur 18 correspondant, et un chapeau qui forme la surface concave. Les mors intérieurs 19 présentent des formes similaires.

De préférence, les surfaces intérieures des mors intérieurs 19 et la portion la plus large selon la direction radiale du plot de centrage 15 présentent des rayons de courbure identiques si bien que, lorsque les pinces 17 sont en position ouverte, les surfaces intérieures des mors intérieurs 19 et le diamètre le plus large du plot de centrage 15 s'inscrivent sur une même circonférence (les surfaces intérieures des mors intérieurs 19 sont situé à une même distance de l'axe Ax que les contours du plot de centrage 15).

Ici, les dimensions des mors 19, 20 ont été choisies de façon que, lorsque les pinces exercent la force de compression radiale sur le chignon CG, seul un faible espace demeure entre deux mors extérieurs de pinces adjacente, par exemple un espace inférieur à 2 millimètres, de façon à compresser en une seule fois la quasi-totalité du chignon. Les mors intérieurs 19 comportent ici, à chacune de leurs extrémités (comprise dans la direction circonférentielle) des doigts séparés par des encoches et adaptés, en position de fermeture des pinces, à se loger dans les encoches du mors intérieur de la pince adjacente. Ils forment ainsi, avec les doigts du mors intérieur de la pince adjacente, une surface de contact avec le chignon CG qui est commune aux deux mors adjacents, et la surface de contact entre les mors intérieur 19 et le chignon CG est par conséquent assurée sur toute la circonférence du chignon CG.

Au repos (lorsque les pinces sont en position ouverte), l'écart entre le mors intérieur 19 et le mors extérieur 20 de chaque pince est choisi de façon à être légèrement supérieur à l'épaisseur du chignon CG mesurée dans la direction radiale, par exemple supérieure d'au moins 2 millimètres. Ainsi, la mise en place de l'outil 1 sur le chignon est facilitée. Par exemple, au repos, les mors extérieurs 20 sont distants de 10 millimètres de la surface extérieure du chignon CG et les mors intérieurs 19 sont éloignés de 5 millimètres de la surface intérieure du chignon CG.

La valeur de la force de compression radiale est ici choisie de façon que le mouvement de translation des mors 19, 20 l'un vers l'autre soit bloqué par la résistance du chignon CG avant que les mors 19, 20 n'atteignent la position de fin de course (« position fermée) permise par le bloc actionneur 18. Par exemple ici, les dimensions des pinces sont telles que la courses des mors intérieurs 19 est stoppée par le chignon CG quatre millimètres avant la position de fin de course et que la course des mors extérieurs 20 soit stoppée par le chignon CG deux millimètres avant la position de fin de course.

Les bloc actionneurs 18 sont globalement en forme de parallélépipèdes rectangles et comportent chacun une première face fixée à la deuxième face 5 de l'embase et une deuxième face opposée fixée à la première face 29 de la butée 12. Ainsi, l'écart entre l'embase 2 et la butée 12 est sensiblement égal à la hauteur des blocs actionneurs 18.

L'outil 1 est configuré de telle façon que les blocs actionneurs 18 d'une part, et les mors intérieurs 19 et extérieurs 20 d'autres part, sont situés de part et d'autre de la butée 12. Ainsi, les mors intérieurs 19 et extérieurs 20 sont en contact avec la deuxième face 30 de la butée 12 et sont mécaniquement couplés au bloc actionneur 18 au travers de la butée 12 qui comporte par exemple des fentes prévues à cet effet. Les pinces 17 étant configurées pour conférer un mouvement radial aux mors, les fentes s'étendent dans la butée 12 selon des directions radiales.

L'outil 1 est ici équipé d'une commande pneumatique couplée au circuit de distribution pneumatique et configurée pour commander la fermeture des pinces 17. La commande pneumatique est une commande bimanuelle comportant une gâchette 11 sur chacune des poignées 10. L'enclenchement de la commande bimanuelle est effectif seulement lorsque les deux gâchettes 11 sont enclenchées simultanément.

La gâchette 11 de chaque poignée 10 est ici connectée au circuit de distribution pneumatique. Par exemple, sur chaque poignée 10, la gâchette 11 est située sur une première portion 24 de la deuxième partie tubulaire 23, de façon qu'un opérateur puisse enclencher la gâchette en serrant la main saisissant poignée 10. La deuxième partie tubulaire 23 comporte ici une deuxième portion 25 dépourvue de gâchette, permettant à l'opérateur de manipuler l'outil sans risquer d'enclencher la commande pneumatique par erreur.

Les gâchette 11 sont ici configurées pour, lors de leur enclenchement simultané, commander un distributeur pneumatique 7 qui va lui-même alimenter les bloc actionneurs 18 de façon à commander la fermeture des pinces 17. La commande des pinces 17 est ici à simple effet, ou normalement ouverte, c'est-à-dire qu'en l'absence d'enclenchement simultanée des gâchettes 11, les pinces 17 reste ou revienne en position ouverte.

Ici, une plaque circonférentielle de protection 21 empêche un opérateur manipulant l'outil d'insérer ses mains entre l'embase 2 et la butée 12 et de passer ses mains sous la butée 12 à proximité des mors intérieurs 19 et extérieurs 20. La plaque circonférentielle de protection 21 est ici une plaque tubulaire en matériau polymère, de préférence transparent, par exemple du polycarbonate.

Par exemple, la plaque circonférentielle 21 est fixée aux bords de l'embase 2 et de la butée 12 et s'étend circonférentiellement d'un bord à l'autre des encoches 3, 13 et longitudinalement (selon une direction parallèle à l'axe Ax) depuis l'embase 2 jusqu'à au-delà des mors 19, 20.

L'outil selon l'invention peut être réalisé dans divers matériaux. Par exemple, selon le mode de réalisation décrit précédemment en lien avec les figures 1 à 4, la butée 12 et le plot de centrage 15 sont réalisés dans des matériaux polymères, par exemple du Polyéthylène haute densité (PEHD). L'embase 2 et l'axe de fixation 14 sont par exemple réalisés dans un matériau métallique, de préférence un métal de faible densité de façon à atteindre un compromis entre la solidité de l'outil 1 et son poids. Par exemple, l'embase 2 et l'axe de fixation 14 sont en aluminium ou en titane.

Les différents éléments de l'outil 1 sont fixés les uns aux autres par divers moyens de fixation, par exemple par vissage.

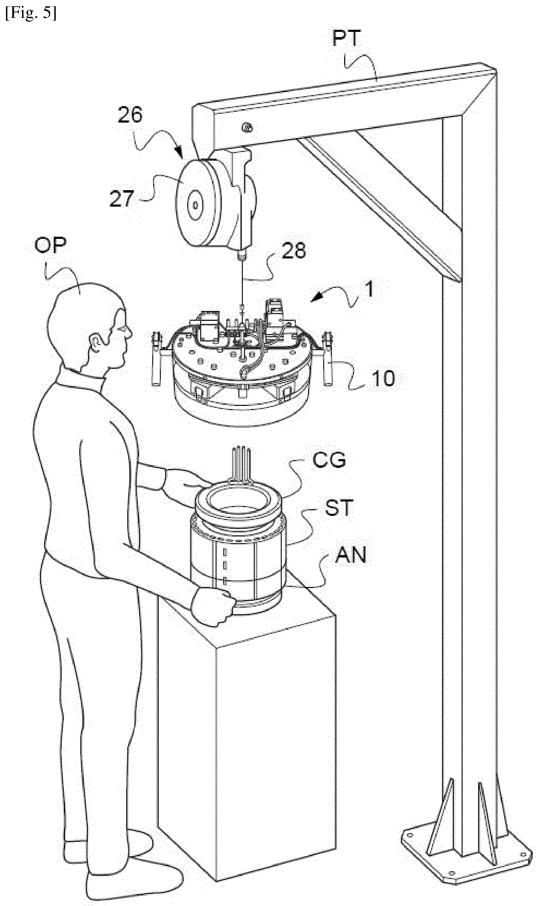

L'outil 1 tel que décrit précédemment est particulièrement adapté pour faciliter et améliorer le procédé de formage du chignon CG du stator ST par un opérateur. Un tel procédé est décrit ci-après et illustré par la [Fig.5].

Comme le montre la [Fig.5], lors de ce procédé, l'outil 1 est suspendu à un point haut, ici à un potence PT, par l'intermédiaire d'un équilibreur de charge 26.

Ici, l'équilibreur de charge 26 comporte un boîtier 27 comportant un enrouleur exerçant une force de rappel sur un câble de suspension 28. Le câble de suspension 28 est attaché, au niveau de son extrémité opposée au boîtier 27, à l'anneau de suspension 9 de l'outil 1, par exemple à l'aide d'un mousqueton. La force de rappel de l'équilibreur de charge 26 est ici réglée de façon à compenser le poids de l'outil 1. Ainsi, lorsque l'outil est suspendu librement au câble de suspension 28, il est en équilibre et reste à la même hauteur. Une force supplémentaire, même faible, appliquée à l'outil et transmise à l'enroulement permet de rompre l'équilibre entre la force de rappel de l'enrouleur et le poids de l'outil 1 et donc de régler la position de l'outil 1 en hauteur.

Dans une première étape de la méthode, un opérateur OP saisit l'outil 1 suspendu au câble 28 par les poignées 10 et positionne l'outil 1 de façon que la butée 12 rentre en contact avec la partie distale du chignon CG relativement au stator ST. Cette partie distale du chignon, également appelée sommet ou crête correspond à la partie du chignon la plus éloignée du corps annulaire AN du stator ST.

Le positionnement de l'outil 1, en particulier le positionnement des pinces 17 par rapport au chignon CG, est facilité par le plot de centrage 15 qui est inséré dans le stator ST.

Lors d'une deuxième étape, lorsque l'outil 1 est convenablement positionné, que la butée 12 est en contact avec le chignon CG et que les mors intérieurs 19 et extérieurs 20 des pinces 17 sont situés radialement de part et d'autre du chignon CG, l'opérateur enclenche simultanément les deux gâchettes 11 de la commande bimanuelle afin de commander la fermeture des pinces 17. Les mors translatent l'un vers l'autre et compressent le chignon CG tant que les gâchettes sont enclenchées. Lorsque l'opérateur OP relâche au moins l'une des deux gâchettes, les pinces s'ouvrent de nouveau.

Lors d'une troisième étape, l'opérateur OP retire l'outil du stator en le soulevant par les poignées 10.

L'invention n'est pas limitée au mode de mise en œuvre et de réalisation décrit ci-avant en lien avec les figures 1 à 5.

Par exemple, il a été décrit précédemment un outil de formage comportant quatre pinces. L'invention n'est toutefois pas limitée à ce nombre et est compatible avec un nombre quelconque de pince. Toutefois, un compromis doit être trouvé entre l'encombrement des pinces sur l'outil et la dimension des mors qui, si elle est trop importante dans la direction circonférentielle, transmettra moins uniformément l'effort de compression radiale au chignon. La demanderesse a constaté qu'un nombre de pinces égal à quatre était particulièrement bien adapté à ces contraintes.

Par ailleurs, l'invention n'est pas limitée aux matériaux mentionnés ci-avant et est compatible avec tout matériau approprié. Par exemple, l'embase et l'axe de fixation sont avantageusement réalisés en aluminium ou en titane, mais peuvent être réalisés dans un autre métal, un alliage de métal ou dans un matériau polymère. Le matériau de la butée n'est pas limité à du polyéthylène de haute densité, mais peut être réalisé dans tout autre matériau polymère, ou tout autre matériau, polymère ou non, qui ne présente pas de risque d'endommager le chignon.

En raison de la nécessité d'exercer une compression radiale sur le chignon, une forme globalement cylindrique de l'outil est la plus adaptée. Cela étant, l'invention n'est pas limitée à cette forme globale de l'outil. Par exemple, l'embase et la butée pourrait présenter des formes différentes, par exemple polygonales, dans la mesure ou la disposition des pinces par rapport à ces éléments permet d'exercer la compression radiale.

L'outil décrit précédemment en lien avec les figures 1 à 5 comporte deux poignées. L'invention n'est toutefois pas limitée à ce nombre. Par exemple, selon certains modes de réalisation de l'invention, l'outil comporte une seule poignée. Cette dernière peut alors être saisie par l'opérateur à l'aide d'une seule main ou configurée pour être saisie par les deux mains de l'opérateur.

Par ailleurs, une commande bimanuelle est particulièrement adaptée pour améliorer la sécurité de l'opérateur et éviter de commander la fermeture des pinces par erreur. Cela étant, l'invention est compatible avec une commande simple. Par exemple, l'invention peut comporte une commande sur une seule des deux poignées. Il serait également possible que chaque poignée comporte une commande simple, l'actionnement de l'une ou l'autre des commandes déclenchant la fermeture de la pince.

Dans les modes de réalisation dans lesquels l'outil ne comporte qu'une seule poignée, celle-ci peut comporter une commande simple ou une commande bimanuelle.

La présence d'un plot de centrage permet avantageusement de faciliter le positionnement de l'outil 1 sur le chignon. L'invention n'est toutefois pas limitée à la présence d'un plot de centrage, et certains modes de réalisation en sont dépourvus. En outre, la forme du plot de centrage exposée précédemment et illustrée sur les figures 1 à 5 n'est pas limitative. D'autres forme de plot de centrage, par exemple en cylindre droit (sans chanfrein), en cône ou en tronc de cône sont envisageables.

L'outil selon l'invention peut être relié au câble de suspension par tout moyen. Un anneau de suspension est particulièrement adapté pour les câbles équipés d'un mousqueton ou d'un crochet, car cela permet une fixation rapide et simple de l'outil au câble de suspension. D'autre moyens sont néanmoins possibles, par exemple un crochet, système de vissage, une plaque adaptée à être couplée à un électro-aimant, etc..

## Revendications

1. Outil de formage pour chignon (CG) d'un stator (ST) bobiné de
machine électrique comportant un corps annulaire (AN) à l'intérieur duquel est ménagée une pluralité d'encoches longitudinales (EC), une pluralité de bobinage comportant des fils insérés dans les encoches longitudinales (EC ) et formant ledit chignon au niveau d'une extrémité du stator (ST), l'outil (1) comportant
- un élément de butée (12) configuré pour venir axialement en butée contre une partie distale du chignon (CG) relativement au stator (ST),
- au moins une pince (17) configurée pour exercer une compression radiale sur le chignon (CG),
- au moins une poignée (10) fixe par rapport à l'élément de butée (12) et,
- une commande manuelle (11) située sur la poignée (10) et configurée pour commander la fermeture de la pince (17).

2. Outil selon la revendication 1, comportant deux poignées (17) fixes par rapport à l'élément de butée (12) et séparées d'une distance telle qu'elles puissent chacune être saisie par une main distincte d'un même opérateur (OP), une première commande manuelle (11) étant située sur une première des deux poignées (10) et une deuxième commande manuelle (11) étant située sur une deuxième des deux poignées (10).

3. Outil selon la revendication 1 ou 2, comportant en outre un plot de centrage (15) qui s'étend depuis l'élément de butée (12) et qui est configurée pour être inséré dans le corps annulaire, selon un axe central du corps annulaire.

4. Outil selon l'une quelconque des revendication 1 à 3, comportant un anneau de fixation (9) adapté à être fixé à un équilibreur de charge (26) pour la suspension de l'outil (1).

5. Outil selon l'une quelconque des revendications 1 à 4, dans lequel la pince (17) est pourvue de deux mors (19, 20) et est configurée pour que la course maximale de chaque mors (19, 20) soit inférieure ou égale à 13 millimètres.

6. Outil selon l'une quelconque des revendications 1 à 5, dans lequel la pince (17) est configurée pour exercer une force de compression maximale comprise entre 1400 newtons et 1600 newtons.

7. Outil selon l'une quelconque des revendications 1 à 6, dans lequel la pince (17) est pourvue d'un mors intérieur (19) présentant une surface convexe et adaptée à épouser une surface intérieure du chignon (CG) et d'un mors extérieur (20) présentant une surface concave et adaptée à épouser une surface extérieure du chignon (CG).

8. Outil selon l'une quelconque des revendications 1 à 7, comportant une pluralité de pinces (17).

9. Ensemble comportant un outil de formage (1) selon l'une quelconque des revendications 1 à 8 et un équilibreur de charge (26) dont la puissance de retour est équivalente au poids de l'outil (1).

10. Procédé de formage d'un chignon (CG) de stator (ST) bobiné de machine électrique comportant un corps annulaire (AN) à l'intérieur duquel est ménagée une pluralité d'encoches longitudinales (EC), une pluralité de bobinage comportant des fils insérés dans les encoches longitudinales (EC) et formant ledit chignon au niveau d'une extrémité du stator, le procédé comportant
- un positionnement, par un opérateur (OP) à l'aide de ladite au moins une poignée (10), d'un outil de formage (1) selon l'une quelconque des revendications 1 à 9 de façon que l'élément de butée (12) soit en contact avec la partie distale du chignon (CG),
- un actionnement de ladite commande manuelle (11) de façon à actionner la fermeture de la pince (17) et à compresser radialement le chignon (CG),
- un retrait de l'outil (1) du stator (ST) par l'opérateur à l'aide de ladite au moins une poignée (10).
